# EUROPÄISCHE PATENTSCHRIFT

(11) **EP 1 899 213 B1**
(45) Veröffentlichungstag und Bekanntmachung des Hinweises auf die Patenterteilung: **19.09.2012**
(21) Anmeldenummer: 06762463.5
(22) Anmeldetag: 06.07.2006
(51) Int. Cl.: B62D 25/16, B60R 21/34

(54) **VORDERWAGENSTRUKTUR EINES KRAFTFAHRZEUGES**
STRUCTURE OF THE FRONT PART OF A MOTOR VEHICLE
STRUCTURE DE LA PARTIE AVANT D'UN VEHICULE AUTOMOBILE

(30) Priorität: 06.07.2005 DE 102005031843
(43) Veröffentlichungstag der Anmeldung: 19.03.2008
(73) Patentinhaber: SMP Deutschland GmbH, 79268 Bötzingen (DE)
(72) Erfinder: RINDERLIN, Jürgen, 79279 Vörstetten (DE); BREISACHER, Michael, Rochester Hills, MI 48307 (US)
(74) Vertreter: Neunert, Peter Andreas
(86) Internationale Anmeldenummer: PCT/EP2006/006611
(87) Internationale Veröffentlichungsnummer: WO 2007/003440

(56) Entgegenhaltungen:
- EP-A- 1 398 249
- EP-A- 1 574 423
- FR-A- 2 855 809
- US-A1- 2002 063 443

## Beschreibung

Die Erfindung betrifft eine Vorderwagenstruktur eines Kraftfahrzeuges nach dem Oberbegriff des Anspruchs 1.

Derartige Vorderwagenstrukturen weisen eine Kotflügelbank auf, die an der A-Säule des Kraftfahrzeugs befestigt ist und als Auflage für den Kotflügel dient.

Steigende Anforderungen an die Vorderwagenstruktur liegen u.A. in der geforderten Verbesserung des Fußgängerschutzes begründet. Die Vorderwagenstruktur muss so ausgelegt sein, dass eine optimale Absorption von Energie ermöglicht wird. Der allgemeine Trend zu ständig reduziertem Bauraum bereitet deshalb Probleme, ausreichend Platz für die erforderliche Energieabsorption zu schaffen.

Aktuelle Entwicklungen legen den Fokus für den Fußgängerschutz auf die Erfüllung der sogenannten Lowerleg Anforderungen, betreffen also insbesondere die Deformationseigenschaften im Bereich der Vorderfront. Maßnahmen zum verbesserten Schutz von insbesondere Hüfte und Kopf eines Fußgängers befinden sich noch in der Vorentwicklungsphase. Speziell die Verbesserung des Schutzes des Kopfes bereitet große Probleme, da unterschiedlichste Körpergrößen zu berücksichtigen sind, die den Schutz eines Kinderkopfes in gleicher Weise ermöglichen wie bei einem Erwachsenenkopf.

Es muss deshalb für einen wirksamen Kopfschutz ein großer Bereich des Kraftfahrzeugs berücksichtigt werden, der sich insbesondere über die gesamte Breite der Motorhaube einschließlich der benachbarten Teilbereiche des Kotflügels erstreckt. Speziell der Bereich des Übergangs von der Motorhaube zum Kotflügel und der darunter befindlichen Kotflügelbank gilt als sogenannter Hardpoint, der auf Grund der aussteifenden Wirkung des Kotflügels, der dort vorliegenden geometrischen Gegebenheiten als auch des geringen Bauraums zwischen Kotflügel und Motorhaube einerseits und der starren Kotflügelbank andererseits als besonders problematisch gilt.

*In der gattungsgemäßen* EP 1 398 249 A *wird ein multifunktioneller Träger für die korrekte Positionierung und Befestigung verschiedener Elemente der Vorderwagenstruktur beschrieben. Die US 2002*/*063443 A1 beschreibt eine Absorptionsstruktur für einen Kotflügel mit einer Fußgängerschutzfunction. Die* FR 2 855 809 A *beschreibt einen Träger für einen Kotflügel mit einer Absorptionsstruktur für einen Fußgängeraufprall*

*Der vorliegenden Erfindung liegt die Aufgabe zugrunde, die Vorderwagenstruktur zu verbessern.*

Gelöst wird diese Aufgabe bei einer Vorderwagenstruktur der eingangs genannten Art mit den Merkmalen des Anspruchs 1.

Vorteilhafte Ausgestaltungen der Erfindung sind durch die Merkmale der Unteransprüche definiert.

Die Erfindung basiert auf der Idee, zwischen der Kotflügelbank und dem Kotflügel einen Absorber anzubringen. Der für den Absorber erforderliche Bauraum wird dadurch geschaffen, dass die Kotflügelbank gegenüber einem Vergleichsfahrzeug ohne eine derartige Maßnahme um ein gewisses Maß nach unten verschoben angeordnet ist. Der hierdurch gewonnene Bauraum (in Z-Richtung, bezogen auf die Fahrzeugkoordinaten) ermöglicht es, ein Absorberelement vorzusehen. Die Auslegung des Absorbers erfolgt derart, dass bei einer Kollision mit einem Fußgänger der Absorber im Extremfall vollständig zusammengedrückt wird und hierdurch die Belastung auf den Fußgänger reduziert wird. Hierbei ermöglich der Absorber eine Verformungsbewegung in Z-Richtung.

Die Verformungsbewegung wird in an sich bekannter Weise in Abhängigkeit der Geometrie des Absorbers in Kombination mit der Wahl des dafür verwendeten Ausgangsmaterials sowie seiner Befestigung bzw. Abstützung zwischen Kotflügel und Kotflügelbank vorbestimmt.

Im Falle einer Kollision mit dem Fußgänger kann somit eine wirkungsvolle Energieabsorption dadurch erreicht werden, dass sich die Motorhaube über den Kotflügel auf dem Absorber abstützt, der sich in Folge der durch den Crash ausgeübte Krafteinleitung soweit verformt, bis er sich flach auf der Kotflügelbank auflegt.

Eine ideal gleichmäßige Kraftverteilung ergibt sich dann, wenn der Absorber sich im Wesentlichen durchgängig über die gesamte Länge der Kotflügelbank erstreckt.

Der Absorber kann als separates Bauteil ausgeführt sein, das an der Kotflügelbank befestigt ist. Alternativ hierzu ist es auch möglich, den Absorber als Bestandteil des Kotflügels auszulegen.

Bevorzugt ist der Absorber als Deformationsprofil ausgeführt. Je nach Anforderung kann er unterschiedlichste geometrische Ausprägungen annehmen, beispielsweise als in Längsrichtung verlaufende Rippe, von der sich V-förmig nach unten abstehend Stützstege erstrecken. Auch sind T- oder Doppel-T-Träger artige Profilformen möglich, die einen verhältnismäßig großen Deformationsweg zulassen, der für den Aufprallschutz besonders vorteilhaft ist.

Durch die hiermit einhergehende Absenkung der Kotflügelbank entsteht zusätzlicher Bauraum, der es ermöglicht, weitere Funktionen zu integrieren, insbesondere Anbauteile in diesem Bereich vorzusehen.

Besonders bevorzugt ist es, Anbauteile direkt an dem Absorber anzubringen.

Als typische Beispiele derartiger Anbauteile sind Wasserbehälter, Clipse, Elektrokabel, elektrische und elektronische Bauteile, Bowdenzüge, Haubenscharniere, Dichtungsprofile, Haubenpuffer oder Scheinwerfer zu nennen.

Je nach Ausführungsform kann der Absorber Befestigungselemente aufweisen, an denen die Anbauteile auf einfache Art und Weise angebracht werden können.

Gemäß der Erfindung weist der Absorber Montageträger zur Aufnahme von Anbauteilen auf. Derartige Montageträger können beispielsweise für die Aufnahme von Scheinwerfern dienen. Somit ist es möglich, den Absorber als Modulträger auszubilden, der eine Vielzahl von Anbauteilen aufnimmt. Hierzu zählen beispielsweise Scheinwerfer, SRA, PDC, Stoßfänger, Kühlerschutzgitter und auch der eigentliche Kotflügel.

Der Montageträger der Erfindung ist als seitlicher Montageträger zur Aufnahme der Scheinwerfer ausgebildet, auch weister eine Weitergührung bis in den Bereich der Fahrzeugmitte hin auf, so dass auch Kühlerschutzgitter oder Stoßfänger daran befestigbar sind.

Die Ausgestaltung als Montage- oder Modulträger ermöglicht eine besonders vorteilhafte und damit kostengünstige Vorfertigung, so dass sich insgesamt die Montagekosten erheblich reduzieren lassen. Darüber hinaus können Anbauteile besonders platzsparend untergebracht werden, für die sonst wertvoller Bauraum im Vorderwagenbereich vorgesehen werden muss.

Besondere Kostenvorteile ergeben sich auch dadurch, dass der Absorber und der Montage- oder Modulträger einteilig hergestellt werden können, beispielsweise durch Anformen des Montageträgers am Absorber.

Die Erfindung wird nachstehend näher anhand der in den Figuren schematisch dargestellten Ausführungsbeispiele erläutert.

Es zeigen .
- Fig. 1: Kotflügelbank mit Absorber,
- Fig. 2: Absorber als separates Bauteil,
- Fig. 3: Kotflügel mit integriertem Absorber,
- Fig. 4: Kotflügel mit integriertem Absorber gemäß Fig. 3, Ansicht vom Motorraum aus
- Fig. 5: Absorber, Ausbaustufe als Modulträger,
- Fig. 6: Absorber, Ausbaustufe mit seitlichem Montageträger für Modulmontage,
- Fig. 7: Absorber, Ausbaustufe gemäß Fig. 6, mit Anbauteilen und Integration weiterer Funktionen,
- Fig. 8: Absorber gemäß Fig. 7 in anderer Perspektive

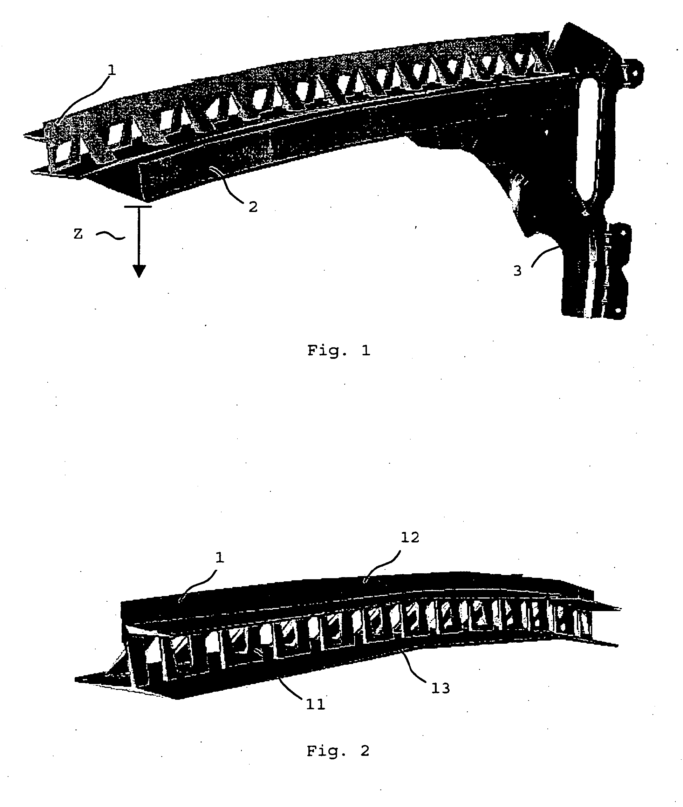

Fig. 1 zeigt einen Absorber 1, der auf eine Kotflügelbank 2 aufgesetzt ist. Die Kotflügelbank 2 ist in an sich bekannter Weise an einer A-Säule des hier nicht näher dargestellten Kraftfahrzeugs befestigt.

Der Absorber A erstreckt sich durchgängig über die gesamte Länge der Kotflügelbank 2.

Aus der Darstellung gemäß Fig. 1 ergibt sich, dass die Kotflügelbank 2 gegenüber einem Vergleichsfahrzeug in Richtung einer Achse Z nach unten verschoben ist, um Platz für den Absorber 1 zu schaffen. Dieser Raum dient zunächst vorrangig als Verformungsweg für den auf der Kotflügelbank 2 aufgesetzten Absorber 1. Die Kotflügelbank 2 kann gegenüber einem Vergleichsfahrzeug schwächer dimensioniert sein, beispielsweise einen reduzierten Querschnitt aufweisen, da ein Teil der Traglast vom Absorber 1 aufgenommen wird.

In Fig. 2 ist nochmals der Absorber 1 als separates Bauteil dargestellt und verdeutlicht den generellen Aufbau als Deformationselement. Gegenüber der Darstellung gemäß Fig. 1 ist eine Perspektive von der gegenüberliegenden Seite, also von der Motorraumseite aus, gewählt.

Der Absorber 1 ist nach Art eines T- oder Doppel-T-Profils ausgeführt und weist eine Vielzahl von Stützstreben 11 auf, die sich in etwa V-förmig zu beiden Seiten einer in Längsrichtung durchgehenden Rippe 12 erstrecken und sich gegenüberliegend in einem Auflagebereich 13 abstützen. Geometrie und Material sind so gewählt, dass das gewünschte Deformationsverhalten erzielt wird. Im Falle einer Kollision werden die Stützstreben 11 soweit deformiert, dass der Absorber 1 flach auf der Kotflügelbank 2 aufliegt.

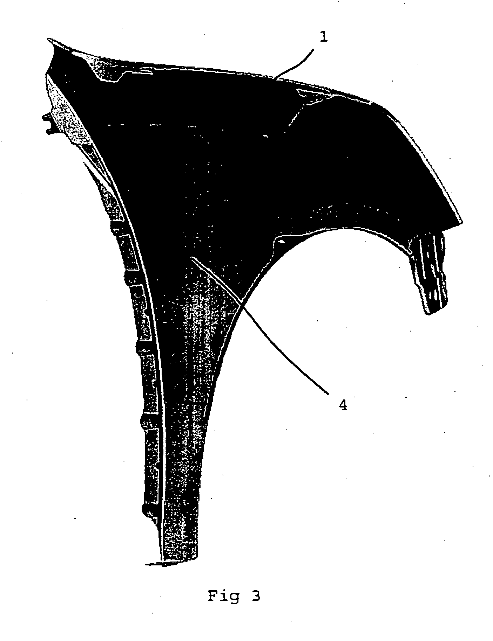

Fig. 3 zeigt einen Kotflügel 3, bei dem der Absorber 1 in einen Kotflügel integriert ist. In diesem Falle wird der Kotflügel 4 zusammen mit dem Absorber 1 auf die hier nicht dargestellte Kotflügelbank aufgesetzt.

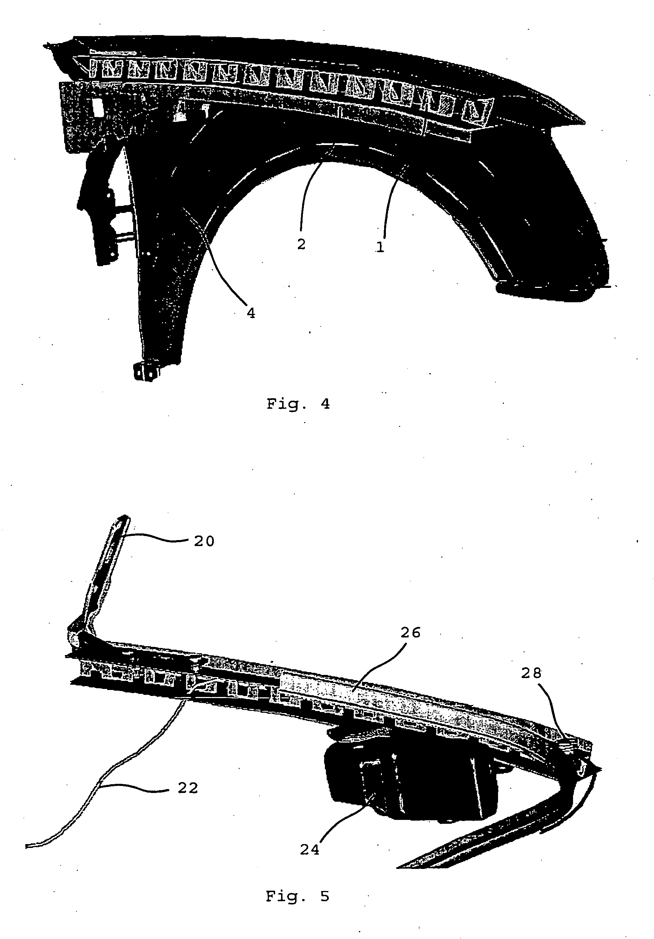

Der korrespondierende Einbauzustand ist in Fig. 4 dargestellt. In dieser Ansicht, der Ansicht vom Motorraum aus, ist zu erkennen, dass sich der Absorber 1 in seiner Längsrichtung vollständig zwischen dem Kotflügel 4 und der Kotflügelbank 2 erstreckt.

Fig. 5 zeigt den Absorber 1, der hier mit verschiedenen Anbauteilen versehen ist. Es sind dies ein Haubenscharnier 20, ein Bowdenzug 22, ein Wasserbehälter 24, ein Dichtungsprofil 26 sowie ein Haubenpuffer 28. Auf diese Weise ist der Absorber 1 in seiner Funktion zum Modulträger erweitert. Die Anbauteile können hierbei nachträglich angebracht werden, ebenso ist es auch möglich, diese bei der Vormontage am Absorber 1 anzubringen und zusammen mit diesen an der Kotflügelbank 2 zu befestigen.

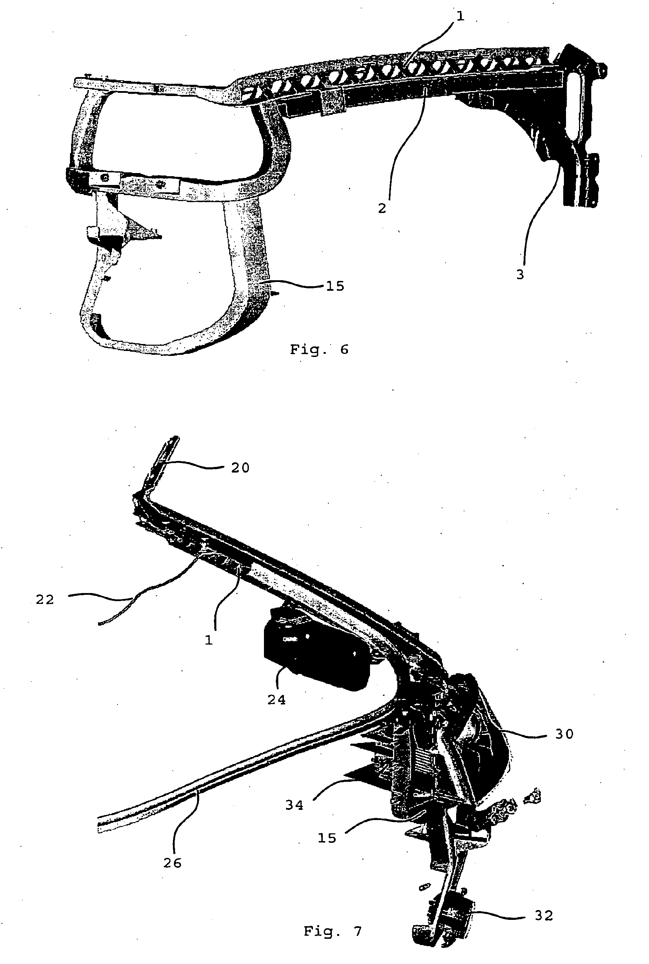

Fig. 6 zeigt die Erweiterung des Absorbers 1 um einen seitlichen Montageträger 15, der die nachstehend näher beschriebenen Zusatzfunktionen wahrnehmen kann. Darüber hinaus ermöglicht diese Konfiguration eine Absorption von Energie von vorne und von der Seite.

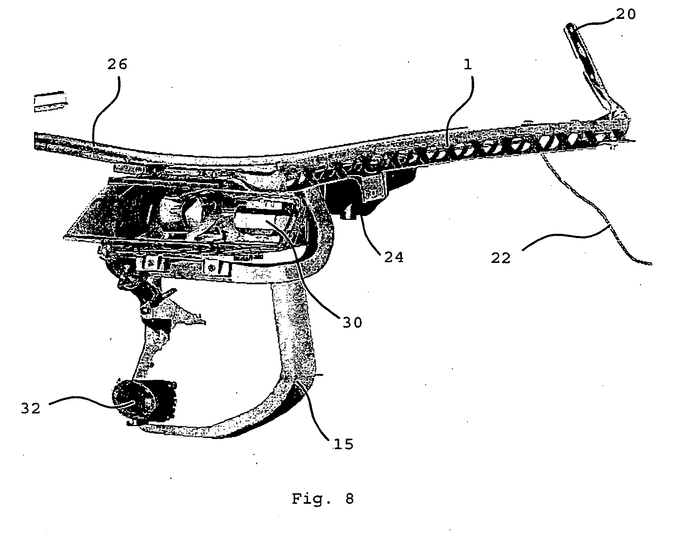

Die Bestückung des seitlichen Montageträgers 15 mit Anbauteilen ergibt sich aus Fig. 7 und Fig. 8, die den Absorber 1 mit dem seitlichen Modulträger 15 in zwei unterschiedlichen Perspektiven zeigen. Neben den Anbauteilen aus Fig. 5 nämlich den Haubenscharnier 20, dem Bowdenzug 22, dem Wasserbehälter 24 sowie dem Dichtungsprofil 26 sind darüber hinaus ein Hauptscheinwerfer 30, ein Nebelscheinwerfer 32 sowie Befestigungselemente 34, beispielsweise für einen hier nicht dargestellten Kühlergrill oder dergleichen vorhanden.

Aus dem Vorstehenden ergibt sich, dass der Absorber 1 neben seiner Hauptfunktion als Deformationselement zur Verbesserung des Fußgängerschutzes weitere Funktionen beinhaltet, so dass ein Modulträger für Anbauteile realisierbar ist.

### Bezugszeichenliste

- 1: Absorber
- 2: Kotflügelbank
- 3: A-Säule
- 4: Kotflügel
- 11: Stützstrebe
- 12: Rippe
- 13: Auflagebereich
- 15: seitlicher Montageträger
- 20: Haubenscharnier
- 22: Bowdenzug
- 24: Wasserbehälter
- 26: Dichtungsprofil
- 30: Hauptscheinwerfer
- 32: Nebelscheinwerfer
- 34: Befestigungselement

- Z: Z-Achse

## Patentansprüche

1. Vorderwagenstruktur für ein Kraftfahrzeug mit einer Kotflügelbank (2)und einem an der Kotflügelbank (2) befestigbaren Kotflügel, wobei zwischen der Kotflügelbank (2) und dem Kotflügel (4) ein Absorber (1) angebracht ist, wobei am Absorber Anbauteile, insbesondere Clipse, Elektrokabel, elektrische und/oder elektronische Bauteile, Bowdenzüge (22),Haubenscharniere (20), Wasserbehälter (24), Dichtungsprofile (26), Haubenpuffer und Scheinwerfer (30, 32) angebracht sind, wobei der Absorber Befestigungselemente aufweist, an denen die Anbauteile gehalten sind, wobei der Absorber (1) Montageträger zur Aufnahme von Anbauteilen aufweist, wobei
**dadurch gekennzeichnet, dass** der Montageträger als seitlicher Montageträger (15) ausgebildet ist, (der Montageträger als seitlicher Montageträger (15) ausgebildet ist), wobei der seitliche Montageträger bis zur Fahrzeugmitte geführt ist.

2. Vorderwagenstruktur nach Anspruch 1,
**dadurch gekennzeichnet, dass** sich der Absorber (1) im Wesentlichen durchgängig über die gesamte Länge der Kotflügelbank (2) erstreckt.

3. Vorderwagenstruktur nach Anspruch 1 oder 2,
**dadurch gekennzeichnet, dass** der Absorber (1) als separates Bauteil ausgeführt ist das an der Kotflügelbank (2) befestigt ist.

4. Vorderwagenstruktur nach Anspruch 1 oder 2,
**dadurch gekennzeichnet, dass** der Absorber (1) Bestandteil des Kotflügels (4) ist.

5. Vorderwagenstruktur nach einem der vorhergehenden Ansprüche,
**dadurch gekennzeichnet, dass** der Absorber (1) als Deformationsprofil mit definierten Deformationseigenschaften ausgelegt ist.

6. Verwendung eines Absorbers in einer Vorderwagenstruktur nach einem der vorhergehenden Ansprüche.

## Claims

1. A front-end structure for a motor vehicle, with a wing plate (2) and a wing capable of being fastened to the wing plate (2), wherein an absorber (1) is mounted between the wing plate (2) and the wing (4), wherein attachment parts, in particular clips, electric cables, electrical and/or electronic components, Bowden cables (22), bonnet hinges (20), water tanks (24), sealing profiles (26), bonnet pads and headlights (30, 32) are attached to the absorber, wherein the absorber has fastening elements on which the attachment parts are held, wherein the absorber (1) has mounting supports for receiving attachment parts, wherein the mounting support is designed in the form of a lateral mounting support (15), **characterized in that** the mounting support (15) is formed integrally on the absorber (1), wherein the lateral mounting support is taken as far as the middle of the vehicle.

2. A front-end structure according to claim 1, **characterized in that** the absorber (1) extends substantially continuously over the entire length of the wing plate (2).

3. A front-end structure according to claim 1 or 2, **characterized in that** the absorber (1) is designed in the form of a separate component which is fastened to the wing plate (2).

4. A front-end structure according to claim 1 or 2, **characterized in that** the absorber (1) is a component of the wing (4).

5. A front-end structure according to any one of the preceding claims, **characterized in that** the absorber (1) is designed in the form of a profiled deformation element with defined deformation characteristics.

6. Use of an absorber in a front-end structure according to any one of the preceding claims.

## Revendications

1. Structure de partie avant d'un véhicule automobile comportant une joue d'aile (2) et une aile pouvant être fixée sur cette joue d'aile (2), un élément absorbeur (1) étant monté entre la joue d'aile (2) et l'aile (4), des pièces additionnelles étant fixées sur l'élément absorbeur, en particulier des clips, des câbles électriques, des composants électriques et/ou électroniques, des câbles Bowden (22), des charnières de capot (20), des réservoirs d'eau (24), des profilés d'étanchéité (26), des tampons de capot et des phares (30, 32), l'élément absorbeur comportant des éléments de fixation sur lesquels sont maintenues les pièces additionnelles, l'élément absorbeur (1) comportant un support de montage pour la réception des pièces additionnelles, ce support de montage étant réalisé sous la forme d'un support de montage latéral (15),
**caractérisée en ce que**
le support de montage latéral (15) est formé sur l'élément absorbeur (1), et s'étend jusqu'à la partie médiane du véhicule.

2. Structure de partie avant d'un véhicule conforme à la revendication 1,
**caractérisée en ce que**
l'élément absorbeur s'étend en continu sur la totalité de la longueur de la joue d'aile (2).

3. Structure de partie avant de véhicule conforme à la revendication 1 ou 2,
**caractérisée en ce que**
l'élément absorbeur (1) est réalisé sous la forme d'un élément séparé qui est fixé sur la joue d'aile (2).

4. Structure de partie avant de véhicule conforme à la revendication 1 ou 2,
**caractérisée en ce que**
l'élément absorbeur (1) constitue une partie de l'aile (4).

5. Structure de partie avant de véhicule conforme à l'une des revendications précédentes,
**caractérisée en ce que**
l'élément absorbeur (1) est conçu sous la forme d'un profilé de déformation présentant des propriétés de déformation définies.

6. Utilisation d'un élément absorbeur dans une structure de partie avant de véhicule conforme à l'une des revendications précédentes.
